(19) Europäisches Patentamt
European Patent Office
Office européen des brevets

(11) **EP 3 362 270 B1**

(12) **FASCICULE DE BREVET EUROPEEN**

(45) Date de publication et mention
de la délivrance du brevet:
**08.07.2020 Bulletin 2020/28**

(51) Int Cl.:
**B29D 30/06** (2006.01)   **B29C 35/08** (2006.01)
**B60C 1/00** (2006.01)    **C08L 53/02** (2006.01)
**B60C 11/00** (2006.01)

(21) Numéro de dépôt: **16781389.8**

(22) Date de dépôt: **12.10.2016**

(86) Numéro de dépôt international:
**PCT/EP2016/074403**

(87) Numéro de publication internationale:
**WO 2017/064091 (20.04.2017 Gazette 2017/16)**

(54) **PNEUMATIQUE COMPRENANT UNE BANDE DE ROULEMENT RETICULÉE PAR BOMBARDEMENT ÉLECTRONIQUE**

REIFEN MIT EINER DURCH ELEKTRONENBESCHUSS VERNETZTEN LAUFFLÄCHE

TYRE COMPRISING A TREAD CROSSLINKED BY ELECTRON BOMBARDMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.10.2015 FR 1559763**

(43) Date de publication de la demande:
**22.08.2018 Bulletin 2018/34**

(73) Titulaire: **Compagnie Générale des
Etablissements Michelin
63000 Clermont-Ferrand (FR)**

(72) Inventeurs:
• **CUSTODERO, Emmanuel
63040 Clermont-Ferrand Cedex 09 (FR)**

• **GORNARD, Benjamin
63040 Clermont-Ferrand Cedex 09 (FR)**

(74) Mandataire: **Wroblewski, Nicolas Paul André
M. F. P. MICHELIN
23, place des Carmes-Déchaux
Service juridique - Propriété Intellectuelle
DCJ/PI - F35 - Site de Ladoux
63040 Clermont-Ferrand Cedex 9 (FR)**

(56) Documents cités:
**EP-A1- 2 058 359      WO-A1-2012/152686
JP-A- 2001 233 020    JP-A- 2009 166 712
JP-A- 2009 173 048    JP-A- 2012 051 149**

EP 3 362 270 B1

**Description**

La présente invention est relative aux objets « pneumatiques », c'est-à-dire, par définition, aux objets qui prennent leur forme utilisable quand on les gonfle d'air ou d'un gaz de gonflage équivalent.

Plus particulièrement, la présente invention se rapporte à un pneumatique comprenant une bande de roulement à base d'un ou plusieurs élastomères thermoplastiques, la bande de roulement étant réticulée au moyen d'un bombardement électronique après la cuisson du pneumatique à un niveau d'exposition de x kGy tel que cette réticulation forme majoritairement des liaisons carbone-carbone, x pouvant prendre toutes les valeurs permettant au rapport

$$\frac{G'(200°C)(xkGy)/G'(40°C)(xkGy)}{G'(200°C)(0kGy)/G'(40°C)(0kGy)}$$

d'être supérieur ou égal à 1,10.

L'invention concerne également un procédé de préparation du pneumatique selon l'invention comprenant en particulier une étape de réticulation post-cuisson de la bande de roulement au moyen d'un bombardement électronique.

Dans un pneumatique conventionnel, la bande de roulement est généralement à base d'un ou plusieurs élastomères diéniques.

Un objectif constant des manufacturiers de pneumatiques est d'améliorer l'adhérence des pneumatiques sur sol mouillé. En parallèle, un autre objectif est de diminuer la résistance au roulement des pneumatiques. Cependant, ces deux objectifs sont difficiles à concilier en ce que l'amélioration de l'adhérence suppose d'augmenter les pertes hystérétiques tandis que l'amélioration de la résistance au roulement suppose de baisser les pertes hystérétiques. Il existe donc un compromis de performance à optimiser.

Par conséquent, les demanderesses ont précédemment développé (WO 2012152686) des pneumatiques pourvus d'une bande de roulement comprenant un élastomère thermoplastique. Ces pneumatiques présentent un très bon compromis de performance en adhérence et en résistance au roulement.

De plus, les bandes de roulement en élastomères thermoplastiques ont une mise en œuvre facilitée due à une faible viscosité en température.

Cependant, sur le pneumatique fini, il se peut que la faible rigidité à haute température recherchée pour la mise en œuvre soit alors un problème pour la performance du pneumatique, en particulier en utilisation à haute température. En effet, lors de cycles d'utilisation du pneumatique tel que des freinages, cela peut se traduire dans des cas extrêmes par un ramollissement de la bande de roulement qui aurait pour conséquence de diminuer l'endurance de la bande de roulement.

Par conséquent, il existe un besoin d'améliorer la tenue en température des bandes de roulement en élastomères thermoplastiques sans dégrader les possibilités de mise en œuvre de ces bandes de roulement en élastomères thermoplastiques.

En particulier, l'utilisation des additifs de réticulation comme le soufre dans les formulations de bande de roulement présente bien souvent des contraintes de mise en œuvre limitant la productivité (temps de grillage par exemple).

Dans la demande DE 10 2012 105 730, un bombardement électronique d'une bande de roulement traditionnelle a été utilisé pour diminuer le « collant » de cette bande de roulement lors de la préparation du pneumatique. Cependant, ces bandes de roulement ne sont pas à base d'élastomères thermoplastiques et ce document ne contient pas d'information sur les performances de telles bandes de roulement.

Le document JP 2009 173048 A divulgue le bombardement électronique d'une bande de roulement pour former une couche présentant un ratio particulier entre le module d'élasticité en traction à 300% à la surface de la bande de roulement et le même module à l'intérieur de la bande de roulement. La bande de roulement est à base de caoutchouc et comprend des agents de vulcanisation.

La demanderesse a maintenant découvert de manière surprenante qu'une réticulation de la bande de roulement au moyen d'un bombardement électronique, après la cuisson du reste du pneumatique selon les techniques conventionnelles, permettait de répondre aux contraintes précédemment formulées, en particulier d'améliorer la tenue en température des bandes de roulement en élastomères thermoplastiques tout en conservant les possibilités de mise en œuvre associée à ces bandes de roulement en élastomères thermoplastiques.

Ainsi, l'invention a pour objet un pneumatique comprenant une bande de roulement à base d'un ou plusieurs élastomères thermoplastiques, un sommet avec une armature de sommet, deux flancs, deux bourrelets, une armature de carcasse ancrée aux deux bourrelets et s'étendant d'un flanc à l'autre, le ou les élastomères thermoplastiques comprenant au moins un bloc élastomère et au moins un bloc thermoplastique, caractérisé en ce que la bande de roulement est réticulée, au moyen d'un bombardement électronique après la cuisson du pneumatique à un niveau d'exposition de x kGy tel que cette réticulation forme majoritairement des liaisons carbone-carbone, x pouvant prendre toutes les valeurs permettant au rapport

$$\frac{G'(200°C)(xkGy)/G'(40°C)(xkGy)}{G'(200°C)(0kGy)/G'(40°C)(0kGy)}$$

d'être supérieur ou égal à 1,10,

G'(200°C)(xkGy) étant le module élastique de cisaillement à 200°C de la bande de roulement réticulée au moyen d'un bombardement électronique à un niveau d'exposition x kGy,

G'(40°C)(xkGy) étant le module élastique de cisaillement à 40°C de la bande de roulement réticulée au moyen d'un bombardement électronique à un niveau d'exposition x kGy,

G'(200°C)(0kGy) étant le module élastique de cisaillement à 200°C de la bande de roulement non réticulée au moyen d'un bombardement électronique et,

G'(40°C)(0kGy) étant le module élastique de cisaillement à 40°C de la bande de roulement non réticulée au moyen d'un bombardement électronique.

Le pneumatique selon l'invention présente un bon compromis de propriétés, en particulier entre d'une part une mise en œuvre facilitée lors de sa préparation et d'autre part une rigidité à haute température améliorée.

L'invention a également pour objet un procédé de préparation d'un pneumatique comprenant une bande de roulement tel que défini ci-dessus comprenant les étapes suivantes :

- extrusion de la bande de roulement, puis
- pose de la bande de roulement extrudée sur le pneumatique, puis
- cuisson du pneumatique, puis
- réticulation de la bande de roulement au moyen d'un bombardement électronique.

Le pneumatique selon l'invention et son procédé de préparation présentent l'avantage de faciliter la manipulation de la bande de roulement lors de la fabrication du pneumatique, étant donné qu'elle ne réticule pas lors des étapes de mélangeage et de mise en forme.

L'invention ainsi que ses avantages seront aisément compris à la lecture de la description, des exemples de réalisations qui suivent et des figures qui représentent :

- figure 1 : un pneumatique selon l'invention en coupe radiale,
- figure 2 : l'évolution de la composante élastique du module de cisaillement en fonction de la température d'une bande de roulement d'un pneumatique selon l'invention,
- figure 3 : la mesure de la composante élastique du module de cisaillement à 200°C en pascal en fonction de la dose d'irradiation post-cuisson du pneumatique selon l'invention,
- figure 4 : la mesure de la composante élastique du module de cisaillement à 200°C en base 100 en fonction de la dose d'irradiation post-cuisson du pneumatique selon l'invention.

Dans la présente invention, sauf indication expresse différente, tous les pourcentages (%) indiqués sont des % en poids.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères de la bande de roulement, c'est-à-dire du poids total du ou des élastomères qu'ils soient thermoplastiques ou non thermoplastiques, présents dans la bande de roulement. Ainsi, un constituant à 60 pce signifiera par exemple 60 g de ce constituant pour 100 g d'élastomère de la bande de roulement.

Par « majoritairement » dans l'expression « cette réticulation forme majoritairement des liaisons carbone-carbone » de la présente demande, on entend que le nombre de liaisons carbone-carbone formées par la réticulation au moyen d'un bombardement électronique est supérieur ou égal à 50 %, de préférence supérieur ou égal à 70 %, plus préférentiellement supérieur ou égal à 95 %, plus préférentiellement encore égal à 100 % par rapport au nombre total de liaisons formées par la réticulation au moyen d'un bombardement électronique.

Comme décrit ci-dessus, le pneumatique selon l'invention comprend en particulier une bande de roulement à base d'un ou plusieurs élastomères thermoplastiques.

Par élastomère thermoplastique (TPE), on entend, de manière connue, un polymère de structure intermédiaire entre un polymère thermoplastique et un élastomère.

Un élastomère thermoplastique est constitué d'un ou plusieurs segments rigides « thermoplastiques » reliés à un ou plusieurs segments souples « élastomères ».

Ainsi, le ou les élastomères thermoplastiques de la bande de roulement utilisable selon l'invention comprennent au moins un bloc élastomère et au moins un bloc thermoplastique.

Typiquement, chacun de ces segments ou blocs contient au minimum plus de 5, généralement plus de 10 unités de base.

Dans la présente demande, lorsqu'il est fait référence à la température de transition vitreuse d'un élastomère thermoplastique, il s'agit de la température de transition vitreuse relative au bloc élastomère (sauf indication contraire). En effet, de manière connue, les élastomères thermoplastiques présentent deux pics de température de transition vitreuse (Tg, mesurée selon ASTM D3418), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques se définissent généralement par une Tg inférieure ou égale à la température ambiante (25°C), tandis que les blocs rigides ont une Tg supérieure ou égale à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Ainsi, le ou les élastomères thermoplastiques utilisables selon l'invention (donc le ou les blocs élastomères des élastomères thermoplastiques) présentent préférentiellement une température de transition vitreuse qui est inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la température de transition vitreuse des élastomères thermoplastiques est plus préférentiellement encore inférieure ou égale à -10°C.

De manière préférentielle également, la température de transition vitreuse des élastomères thermoplastiques utilisables selon l'invention est supérieure à -100°C.

La masse moléculaire moyenne en nombre (notée Mn) des élastomères thermoplastiques est préférentiellement comprise entre 30 000 et 500 000 g/mol, plus préférentiellement comprise entre 40 000 et 400 000 g/mol. En dessous des minima indiqués, la cohésion entre les chaînes d'élastomère des élastomères thermoplastiques, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la mise en œuvre. Ainsi, on a constaté qu'une valeur comprise entre 50 000 et 300 000 g/mol était particulièrement bien adaptée à une utilisation des élastomères thermoplastiques dans une bande de roulement de pneumatique.

La masse moléculaire moyenne en nombre (Mn) des élastomères thermoplastiques est déterminée de manière connue, par chromatographie d'exclusion stérique (SEC). L'échantillon est préalablement solubilisé dans un solvant adapté à une concentration d'environ 2 g/l ; puis la solution est filtrée sur filtre de porosité 0,45 $\mu$m avant injection. L'appareillage utilisé est une chaîne chromatographique « WATERS alliance ». Le volume injecté de la solution de l'échantillon de polymère est de 100 $\mu$l. Le détecteur est un réfractomètre différentiel « WATERS 2410 » et son logiciel associé d'exploitation des données chromatographiques est le système « EMPOWER ». Les conditions sont adaptables par l'homme du métier. Par exemple dans le cas des TPE de type COPE, le solvant d'élution est l'hexafluoroisopranol avec du sel de trifluoroactétate de sodium à une concentration de 0,02 M, le débit de 0,5 ml/min, la température du système de 35°C et la durée d'analyse de 90 min. On utilise un jeu de trois colonnes PHENOMENEX en série, de dénominations commerciales « PHENOGEL » (tailles de pores : $10^5$, $10^4$, $10^3$ A). Les masses molaires moyennes calculées sont relatives à une courbe d'étalonnage réalisée avec des étalons de PMMA (polyméthacrylate de méthyle). Par exemple dans le cas des élastomères thermoplastiques styréniques, l'échantillon est préalablement solubilisé dans du tétrahydrofuranne à une concentration d'environ 1 g/L ; puis la solution est filtrée sur filtre de porosité 0,45 $\mu$m avant injection. L'appareillage utilisé est une chaîne chromatographique « WATERS alliance ». Le solvant d'élution est le tétrahydrofuranne, le débit de 0,7 mL/mn, la température du système de 35°C et la durée d'analyse de 90 mn. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 $\mu$L. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn avec Mw masse moléculaire moyenne en poids) du ou des élastomères thermoplastiques est de préférence inférieur à 3 ; plus préférentiellement inférieur à 2, et encore plus préférentiellement inférieur à 1,5.

Les élastomères thermoplastiques utilisables selon l'invention peuvent être des copolymères avec un petit nombre de blocs (moins de 5, typiquement 2 ou 3), auquel cas ces blocs ont de préférence des masses élevées, supérieures à 15 000 g/mol.

Les élastomères thermoplastiques peuvent être également des copolymères avec un grand nombre de blocs (plus de 30, typiquement de 50 à 500) plus petits, auquel cas ces blocs ont de préférence des masses peu élevées, par exemple de 500 à 5000 g/mol, ces élastomères thermoplastiques seront appelés élastomères thermoplastiques multiblocs par la suite.

Selon une première variante, les élastomères thermoplastiques utilisables selon l'invention se présentent sous une forme linéaire.

Dans un premier mode particulier de cette première variante, les élastomères thermoplastiques sont des copolymères diblocs : bloc thermoplastique/bloc élastomère.

Dans un deuxième mode particulier de cette première variante, les élastomères thermoplastiques sont des copolymères triblocs : bloc thermoplastique/bloc élastomère/bloc thermoplastique, c'est-à-dire un bloc élastomère central et un bloc thermoplastique terminal à chacune des deux extrémités du bloc élastomère.

Dans un troisième mode particulier de cette première variante, les élastomères thermoplastiques sont constitués d'un enchaînement linéaire de blocs élastomères et de blocs thermoplastiques (élastomères thermoplastiques multiblocs).

Selon une deuxième variante, les élastomères thermoplastiques utilisables selon l'invention se présentent sous une forme étoilée à au moins trois branches.

Par exemple, les élastomères thermoplastiques peuvent alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une troisième variante, les élastomères thermoplastiques utilisables selon l'invention se présentent sous une forme branchée ou dendrimère. Les élastomères thermoplastiques peuvent alors se composer d'un bloc élastomère branché ou dendrimère et d'un bloc thermoplastique, situé à l'extrémité des branches du bloc élastomère dendrimère.

Comme expliqué précédemment, le ou les élastomères thermoplastiques utilisables selon l'invention comprennent au moins un bloc élastomère et au moins un bloc thermoplastique.

Les blocs élastomères des élastomères thermoplastiques utilisables selon l'invention, peuvent être tous les élastomères connus de l'homme de l'art.

On distingue généralement les blocs élastomères saturés des blocs élastomères insaturés.

Par bloc élastomère saturé, on entend que ce bloc comprend majoritairement des motifs ne comprenant pas d'insaturations éthyléniques (c'est-à-dire des doubles liaisons carbone-carbone).

Par bloc élastomère insaturé, on entend que ce bloc comprend majoritairement des motifs comprenant des insaturations éthyléniques.

Par « majoritairement des motifs », on entend au sens de la présente invention que les motifs visés sont majoritaires en poids par rapport à l'ensemble des motifs du bloc considéré, c'est-à-dire représentent plus de 50 % en poids des motifs du bloc considéré, de préférence plus de 75 % et plus préférentiellement de plus de 85 %.

Les blocs élastomères saturés sont généralement constitués par la polymérisation de monomères éthyléniques. On peut citer en particulier les blocs polyalkylènes tels que les copolymères statistiques éthylène-propylène ou éthylène-butylène. Ces blocs élastomères saturés peuvent aussi être obtenus par hydrogénation de blocs élastomères insaturés.

Il peut aussi s'agir de blocs aliphatiques issus de la famille des polyéthers, des polyesters, ou des polycarbonates. En particulier, les blocs élastomères saturés peuvent notamment être constitués par des polyéthers, notamment les polytétraméthylène glycol (PTMG), les polyéthylènes glycols (PEG).

Selon une variante, les monomères polymérisés pour former un bloc élastomère saturé peuvent être copolymérisés, de manière statistique, avec au moins un autre monomère de manière à former un bloc élastomère saturé. Selon cette variante, la fraction molaire en monomère polymérisé autre qu'un monomère éthylénique, par rapport au nombre total de motifs du bloc élastomère saturé, doit être telle que ce bloc garde ses propriétés d'élastomère saturé. Avantageusement la fraction molaire de cet autre co-monomère peut aller de 0 à 50 %, plus préférentiellement de 0 à 45 % et encore plus préférentiellement de 0 à 40 %.

Par exemple, des diènes conjugués en $C_4$-$C_{14}$ peuvent être copolymérisés avec les monomères éthyléniques, les motifs éthyléniques restant majoritaires comme vu ci-dessus.

De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-néopentylbutadiène, le 1,3-cyclopentadiène, le 1,3-cyclohexadiène, le 1-vinyl-1,3-cyclohexadiène et un mélange de ces diènes conjugués, et de préférence, ces diènes conjugués sont choisis parmi l'isoprène et un mélange de diènes conjugués contenant de l'isoprène.

Les blocs élastomères insaturés sont généralement constitués par la polymérisation majoritairement de monomères diéniques.

Alternativement, les blocs élastomères insaturés peuvent aussi être constitués par la polymérisation majoritairement d'un monomère comprenant une double liaison carbone-carbone linéaire et une double liaison carbone-carbone de type cyclique, c'est le cas par exemple dans le polynorbornène.

De préférence, des diènes conjugués en $C_4$-$C_{14}$ peuvent être polymérisés ou copolymérisés pour constituer un bloc élastomère insaturé.

De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, le 1-vinyl-1,3-cyclohexadiène, et un mélange de ces diènes conjugués ; de préférence, ces diènes conjugués sont choisis parmi l'isoprène, le butadiène et un mélange contenant de l'isoprène et/ou du butadiène.

Selon une variante, les monomères polymérisés pour former un bloc élastomère insaturé peuvent être copolymérisés, de manière statistique, avec au moins un autre monomère de manière à former un bloc élastomère insaturé. Selon cette variante, la fraction molaire en monomère polymérisé autre qu'un monomère diénique, par rapport au nombre total de motifs du bloc élastomère insaturé, doit être telle que ce bloc garde ses propriétés d'élastomère insaturé. Avantageusement la fraction molaire de cet autre co-monomère peut aller de 0 à 50 %, plus préférentiellement de 0 à 45 % et encore plus préférentiellement de 0 à 40 %.

A titre d'illustration, cet autre monomère susceptible de copolymériser avec le monomère premier peut être choisi parmi les monomères éthyléniques tels que définis précédemment (par exemple l'éthylène), les monomères de type vinylaromatiques ayant de 8 à 20 atomes de carbone tels que définis ci-après ou encore, il peut s'agir d'un monomère tel que l'acétate de vinyle.

A titre de composés vinylaromatiques conviennent notamment les monomères styréniques, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Ainsi, selon un mode de réalisation préférentiel, le au moins un bloc élastomère peut être un copolymère statistique de type styrène-butadiène (SBR), ce copolymère pouvant être hydrogéné. Ce bloc SBR possède de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg du bloc SBR est supérieure à - 100°C. Conviennent notamment, les blocs SBR ayant une Tg comprise entre 20°C et -70°C et plus particulièrement entre 0°C et -50°C. De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée. De manière préférentielle, on utilise notamment un bloc SBR ayant une teneur en styrène comprise, par exemple dans un domaine allant de 10 % à 60 % en poids, de préférence de 20 % à 50 % en poids, et pour la partie butadiénique, une teneur en liaisons -1,2 comprise dans un domaine allant de 4 % à 75 % (% molaire), et une teneur en liaisons -1,4 comprise dans un domaine allant de 20 % et 96 % (% molaire).

La détermination du taux d'hydrogénation est réalisée par une analyse RMN. Les spectres sont acquis sur un spectromètre Avance 500 MHz BRUKER équipé d'une Cryosonde 1H-X 5 mm. L'expérience RMN 1H quantitative, utilise une séquence simple impulsion 30° et un délai de répétition de 5 secondes entre chaque acquisition. 64 accumulations sont réalisées. Les échantillons (environ 25 mg) sont solubilisés dans le CS2 environ 1 mL, 100 µl de cyclohexane deutéré sont ajouté pour faire le lock pendant l'acquisition. Les déplacements chimiques sont calibrés par rapport à l'impureté protonée du CS2 δppm 1H à 7,18 ppm référencé sur le TMS (δppm 1H à 0 ppm). Le spectre RMN 1H permet de quantifier la microstructure par intégration des massifs de signaux caractéristiques des différents motifs :

- Le styrène provenant du SBR et des blocs polystyrène. Il est quantifiable dans la zone des aromatiques entre 6,0 ppm et 7,3 ppm pour 5 protons (en retirant l'intégrale du signal de l'impureté du CS2 à 7,18 ppm).
- Le PB1-2 provenant du SBR. Il est quantifiable dans la zone des éthyléniques entre 4,6 ppm et 5,1 ppm pour 2 protons.
- Le PB1-4 provenant du SBR. Il est quantifiable dans la zone des éthyléniques entre 5,1 ppm et 6,1 ppm pour 2 protons et en supprimant 1 proton du motif PB1-2.
- Le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8 ppm pour 3 protons.

- Le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif = Intégrale 1H d'un motif/ ∑(intégrales 1H de chaque motif). Par exemple pour un motif de styrène : %molaire du styrène = (Intégrale 1H du styrène) / (Intégrale 1H du styrène + Intégrale 1H du PB1-2 + Intégrale 1H du PB1-4 + Intégrale 1H du PB1-2 hydrogéné + Intégrale 1H du PB1-4 hydrogéné).

Selon le taux d'hydrogénation du bloc SBR, la teneur en double liaison de la partie butadiénique du bloc SBR peut diminuer jusqu'à une teneur de 0 % molaire pour un bloc SBR totalement hydrogéné, auquel cas l'élastomère thermoplastique correspondant sera considéré comme saturé. De préférence, dans les TPE utiles aux besoins de l'invention, le bloc élastomère SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100 % molaire des doubles liaisons dans la portion butadiène sont hydrogénées.

De préférence pour l'invention, les blocs élastomères des élastomères thermoplastiques présentent au total, une masse moléculaire moyenne en nombre (« Mn ») allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en bande de roulement de pneumatique.

Le ou les blocs élastomères peuvent également être des blocs comprenant plusieurs types de monomères éthyléniques, diéniques ou styréniques tels que définis ci-dessus.

De manière particulièrement préférée dans l'invention, le ou les blocs élastomères sont choisis dans le groupe constitué par les élastomères éthyléniques, les polyéthers, les élastomères diéniques, ces derniers étant optionnellement partiellement ou totalement hydrogénés, et les mélanges de ces polymères.

De manière tout particulièrement préférée dans l'invention, le ou les blocs élastomères sont choisis dans le groupe constitué par les polyisoprènes, les polybutadiènes, les polyéthers, les copolymères d'éthylène et de butylène, les copolymères de styrène et de butadiène, ces derniers étant optionnellement partiellement ou totalement hydrogénés, et les mélanges de ces polymères.

Le ou les blocs élastomères peuvent également être constitués de plusieurs blocs élastomères tels que définis ci-dessus.

Comme expliqué précédemment, les polymères thermoplastiques utilisables selon l'invention comprennent également au moins un bloc thermoplastique.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Le ou les blocs thermoplastiques peuvent être constitués à partir de monomères polymérisés de diverses natures.

En particulier, le ou les blocs thermoplastiques peuvent être constitués des blocs suivants ou d'un mélange des blocs suivants :

- les polyoléfines (polyéthylène, polypropylène) ;
- les polyuréthanes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate ;
- le polyétherimide ;
- les copolymères thermoplastiques tels que le copolymère acrylonitrile-butadiène-styrène (ABS).

Le ou les blocs thermoplastique peuvent également être obtenus à partir des monomères choisis parmi :

- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A: Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Selon une variante de l'invention, les monomères ci-dessus peuvent être copolymérisés avec au moins un autre monomère tant que celui-ci ne modifie pas le caractère thermoplastique du bloc, c'est-à-dire que le bloc a une température de transition vitreuse, ou une température de fusion dans le cas des polymères semi-cristallins, supérieure ou égale à 80°C.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Comme expliqué ci-dessus, le ou les blocs thermoplastiques peuvent être choisis parmi les polystyrènes et les polymères comprenant au moins un bloc polystyrène.

Concernant les polystyrènes, ceux-ci sont obtenus à partir de monomères styréniques.

Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans les élastomères thermoplastiques utilisables selon l'invention, est compris entre 5 % et 50 %. En dessous du minimum indiqué, le caractère thermoplastique de l'élastomère risque de diminuer de manière sensible tandis qu'au-dessus du maximum préconisé, l'élasticité de la bande de roulement peut être affectée. Pour ces raisons, le taux de styrène est plus préférentiellement compris entre 10 % et 40 %.

Le ou les blocs thermoplastiques des élastomères thermoplastiques utilisables selon l'invention peuvent également être constitués de plusieurs des blocs thermoplastiques tels que définis ci-dessus.

La proportion des blocs thermoplastiques dans les élastomères thermoplastiques utilisables selon l'invention est déterminée d'une part par les propriétés de thermoplasticité que doivent présenter les élastomères thermoplastiques.

Le ou les blocs thermoplastiques sont préférentiellement présents dans des proportions suffisantes pour préserver le caractère thermoplastique des élastomères thermoplastiques utilisables selon l'invention. Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la préparation du pneu peut également contribuer à déterminer la proportion des blocs thermoplastiques dans les élastomères thermoplastiques utilisables selon l'invention.

De préférence, les blocs thermoplastiques des élastomères thermoplastiques présentent au total, une masse moléculaire moyenne en nombre (« Mn ») allant de 5 000 g/mol à 150 000 g/mol, de manière à conférer aux élastomères thermoplastiques de bonnes propriétés élastomériques et une tenue mécanique suffisante et compatible avec l'utilisation en bande de roulement de pneumatique.

De manière particulièrement préférée dans l'invention, le ou les blocs thermoplastiques sont choisis dans le groupe constitué par les polystyrènes, les polyesters, les polyamides, les polyuréthanes, et les mélanges de ces polymères.

De manière tout particulièrement préférée dans l'invention, le ou les blocs thermoplastiques sont choisis dans le groupe constitué par les polystyrènes, les polyesters, les polyamides, et les mélanges de ces polymères.

A titre d'élastomère thermoplastique utilisable selon l'invention, on peut citer dans un premier mode particulier de l'invention, un copolymère dont la partie élastomère est saturée, et comportant des blocs styrènes et des blocs alkylènes.

Les blocs alkylènes sont préférentiellement de l'éthylène, du propylène ou du butylène.

Plus préférentiellement dans ce premier mode particulier, les élastomères thermoplastiques utilisables selon l'invention sont choisis parmi les copolymères diblocs, triblocs linéaires ou étoilés suivants : styrène/éthylène/butylène (SEB), styrène/éthylène/propylène (SEP), styrène/éthylène/éthylène/propylène (SEEP), styrène/éthylène/ butylène/styrène (SEBS), styrène/éthylène/propylène/styrène (SEPS), styrène/éthylène/éthylène/propylène/styrène (SEEPS), styrène/ isobutylène (SIB), styrène/isobutylène/styrène (SIBS), et les mélanges de ces copolymères.

Selon un deuxième mode particulier, les élastomères thermoplastiques utilisables selon l'invention sont des copolymères dont la partie élastomère est insaturée, et qui comporte des blocs styrènes et des blocs diènes, ces blocs diènes étant en particulier des blocs isoprène ou butadiène.

Plus préférentiellement dans ce deuxième mode particulier, ces élastomères thermoplastiques sont choisis parmi les copolymères diblocs, triblocs linéaires ou étoilés suivants : styrène/butadiène (SB), styrène/isoprène (SI), styrène/butadiène/ isoprène (SBI), styrène/butadiène/styrène (SBS), styrène/isoprène/ styrène (SIS), styrène/butadiène/isoprène/styrène (SSIS), styrène/copolymère butadiène-styrène éventuellement hydrogéné/styrène (SOE) et les mélanges de ces copolymères.

Selon un troisième mode particulier, les élastomères thermoplastiques utilisables selon l'invention sont des copolymères linéaires ou étoilés dont la partie élastomère comporte une partie saturée et une partie insaturée comme par exemple le styrène/ butadiène/butylène (SBB), le styrène/butadiène/butylène/styrène (SBBS) ou un mélange de ces copolymères.

Selon un quatrième mode particulier, les élastomères thermoplastiques utilisables selon l'invention sont des élastomères thermoplastiques multiblocs.

En particulier, on peut citer les copolymères comportant des blocs copolymère statistique d'éthylène et de propylène/polypropylène, polybutadiène/polyuréthane (TPU), polyéther/polyester (COPE), polyéther/polyamide (PEBA).

Les blocs polyéthers sont préférentiellement des polyéthylène glycols.

De manière très préférentielle, les élastomères thermoplastiques utilisables selon l'invention sont choisis parmi les copolymères suivants : styrène/éthylène/butylène/styrène (SEBS), polyéther/polyester (COPE), polyéther/polyamide (PEBA), styrène/butadiène/styrène (SBS), styrène/isoprène/styrène (SIS), styrène/copolymère butadiène-styrène éventuellement hydrogéné/styrène (SOE), et les mélanges de ces copolymères.

A titre d'exemples d'élastomères thermoplastiques commercialement disponibles et utilisables selon l'invention, on peut citer les élastomères de type SEPS, SEEPS, ou SEBS commercialisés par la société Kraton sous la dénomination « Kraton G » (par exemple produits 61650, 61651, 61654, 61730) ou la société Kuraray sous la dénomination « Septon » (par exemple « Septon 2007 », « Septon 4033 », « Septon 004 ») ; ou les élastomères de type SIS commercialisés par Kuraray, sous le nom « Hybrar 5125 », ou commercialisés par Kraton sous le nom de « D 1161 » ou encore les élastomères de type SBS linéaire commercialisé par Polimeri Europa sous la dénomination « Europrene SOL T 166 » ou SBS étoilé commercialisés par Kraton sous la dénomination « D1184 ». On peut également citer les élastomères commercialisés par la société Dexco Polymers sous la dénomination de « Vector » (par exemple « Vector 4114 », « Vector 8508 »).

Parmi les élastomères thermoplastiques multiblocs, on peut citer l'élastomère thermoplastique « Vistamaxx » commercialisé par la société Exxon ; l'élastomère thermoplastique COPE commercialisé par la société DSM sous le dénomination « Arnitel », ou par la société Dupont sous le dénomination « Hytrel », ou par la société Ticona sous la dénomination « Riteflex » ; l'élastomère thermoplastique PEBA commercialisé par la société Arkema sous le dénomination « PEBAX » ; l'élastomère thermoplastique TPU commercialisé par la société Sartomer sous le dénomination « TPU 7840 », ou par la société BASF sous le dénomination « Elastogran ».

Il est également possible que les élastomères thermoplastiques donnés en exemple ci-dessus soient mélangés entre eux au sein de la bande de roulement utilisable selon l'invention.

Il est également possible que les élastomères thermoplastiques présentés ci-dessus soit en mélange avec d'autres élastomères non-thermoplastiques.

Dans un tel cas, le ou les élastomères thermoplastiques constituent la fraction majoritaire en poids ; ils représentent alors au moins 65 % en poids, de préférence au moins 70 % en poids, plus préférentiellement au moins 75 % en poids de l'ensemble des élastomères présents dans la bande de roulement.

De manière plus préférentielle, le ou les élastomères thermoplastiques représentent au moins 95 % (en particulier 100 %) en poids de l'ensemble des élastomères présents dans la bande de roulement.

Ainsi, le taux en élastomères thermoplastiques de la bande de roulement varie de 65 à 100 pce, de préférence de 70 à 100 pce, plus préférentiellement de 75 à 100 pce, et encore plus préférentiellement de 95 à 100 pce.

De manière particulièrement préférée, le ou les élastomères thermoplastiques utilisables selon l'invention sont les seuls élastomères de la bande de roulement.

Le ou les élastomères thermoplastiques décrits précédemment sont suffisants à eux seuls pour que soit utilisable la bande de roulement selon l'invention.

Cependant, dans le cas où les élastomères thermoplastiques sont mélangés à des élastomères non-thermoplastiques, la bande de roulement selon l'invention peut comporter alors un ou plusieurs caoutchoucs diéniques à titre d'élastomère non-thermoplastique.

Par élastomère ou caoutchouc « diénique », doit être compris de manière connue un ou plusieurs élastomères issus au moins en partie (c'est-à-dire un homopolymère ou un copolymère) de monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en mole). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50 %.

C'est ainsi que des élastomères diéniques tels que certains caoutchoucs butyl ou les copolymères de diènes et d'alpha oléfines type EPDM peuvent être qualifiés d'élastomères diéniques « essentiellement saturés » (taux de motifs d'origine diénique faible ou très faible, toujours inférieur à 15 %).

Ces définitions étant données, on entend plus particulièrement par élastomère diénique, quelque soit la catégorie ci-dessus, susceptible d'être utilisé dans la bande de roulement utilisable selon l'invention :

(a) - tout homopolymère obtenu par polymérisation d'un monomère diène conjugué ayant de 4 à 12 atomes de carbone ;

(b) - tout copolymère obtenu par copolymérisation d'un ou plusieurs diènes conjugués entre eux ou avec un ou plusieurs composés vinyle aromatique ayant de 8 à 20 atomes de carbone ;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;

(d) - un copolymère d'isobutène et d'isoprène (caoutchouc diénique butyl), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, les aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Les copolymères des élastomères diéniques peuvent contenir entre 99 % et 20 % en poids d'unités diéniques et entre 1 % et 80 % en poids d'unités vinylaromatiques. Les élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

La bande de roulement utilisable selon l'invention peut également comprendre une charge renforçante.

En particulier, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la bande de roulement (noir de carbone et/ou charge inorganique renforçante telle que silice) est compris dans un domaine allant de 0 à 30 %, ce qui correspond environ à un taux de 0 à 100 pce pour une bande de roulement sans plastifiant. Préférentiellement la bande de roulement utilisable selon l'invention comprend moins de 30 pce de charge renforçante et plus préférentiellement moins de 10 pce.

Selon une variante préférentielle de l'invention, la bande de roulement ne contient pas de charge renforçante.

De la même manière, la bande de roulement utilisable selon l'invention peut contenir une ou plusieurs charges micrométriques, inertes telles que les charges lamellaires connues de l'homme de l'art.

De préférence, la bande de roulement utilisable selon l'invention ne contient pas de charge micrométrique.

Le ou les élastomères thermoplastiques décrits précédemment sont suffisants à eux seuls pour que soit utilisable la bande de roulement selon l'invention.

Toutefois, selon un mode de réalisation préférentiel de l'invention, la bande de roulement peut comporter également, au moins un agent plastifiant, tel qu'une huile (ou huile plastifiante ou huile d'extension) ou une résine plastifiante dont la fonction est de faciliter la mise en œuvre de la bande de roulement, particulièrement son intégration au pneumatique par un abaissement du module et une augmentation du pouvoir tackifiant.

On peut utiliser toute huile, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

Par exemple, l'huile d'extension est choisie dans le groupe constitué par les huiles paraffiniques, telle qu'une huile paraffinique à basse viscosité (PABV).

Ainsi, dans un mode particulier de la présente invention, le au moins un agent plastifiant est une huile paraffinique.

L'homme du métier saura, à la lumière de la description et des exemples de réalisation qui suivent, ajuster la quantité de plastifiant en fonction des élastomères thermoplastiques utilisés (comme indiqué précédemment) ; des conditions particulières d'usage du pneumatique muni de la bande de roulement.

Lorsqu'elle est utilisée, on préfère que le taux d'huile d'extension soit compris dans un domaine variant de 0 à 80 pce, préférentiellement de 0 à 50 pce, plus préférentiellement de 5 à 50 pce selon la température de transition vitreuse et le module visés pour la bande de roulement.

La bande de roulement décrite précédemment peut comporter par ailleurs les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en œuvre ou autres stabilisants, ou encore les promoteurs aptes à favoriser l'adhésion au reste de la structure de l'objet pneumatique.

De manière préférentielle, la bande de roulement ne contient pas tous ces additifs en même temps et de manière encore plus préférentielle, la bande de roulement ne contient aucun de ces agents.

Comme expliqué précédemment, la bande de roulement utilisable selon l'invention est réticulée au moyen d'un bombardement électronique après la cuisson du pneumatique.

De manière préférée, ce bombardement électronique s'effectue au moyen d'un rayonnement béta.

Ainsi, de manière préférée, la bande de roulement utilisable dans le pneumatique selon l'invention est réticulée au moyen d'un bombardement électronique à un niveau d'exposition d'au moins 50 kGy, de préférence allant de 70 à 300 kGy.

Egalement et à titre optionnel, la bande de roulement de l'invention peut contenir un système de réticulation connu de l'homme du métier.

Cependant, de manière préférentielle, la bande de roulement ne contient pas de système de réticulation. Ainsi, la réticulation au moyen d'un bombardement électronique est de préférence la seule réticulation de la bande de roulement utilisable dans le pneumatique selon l'invention.

La bande de roulement utilisable dans le pneumatique selon l'invention présente un rapport

$$\frac{G'(200°C)(xkGy)/G'(40°C)(xkGy)}{G'(200°C)(0kGy)/G'(40°C)(0kGy)}$$

supérieur ou égal à 1,10,

G'(200°C)(xkGy) étant le module élastique de cisaillement à 200°C de la bande de roulement réticulée au moyen d'un bombardement électronique à un niveau d'exposition x kGy,

G'(40°C)(xkGy) étant le module élastique de cisaillement à 40°C de la bande de roulement réticulée au moyen d'un bombardement électronique à un niveau d'exposition x kGy,

G'(200°C)(0kGy) étant le module élastique de cisaillement à 200°C de la bande de roulement non réticulée au moyen d'un bombardement électronique et,

G'(40°C)(0kGy) étant le module élastique de cisaillement à 40°C de la bande de roulement non réticulée au moyen d'un bombardement électronique.

De préférence, ce rapport varie de 1,10 à 75.

Outre les élastomères précédemment décrits, la composition de la bande de roulement pourrait aussi comporter, toujours selon une fraction pondérale minoritaire par rapport aux élastomères thermoplastiques, des polymères autres que des élastomères, tels que par exemple des polymères thermoplastiques. Lorsqu'ils sont présents dans la bande de roulement, on préfère que le taux total de polymères thermoplastiques non élastomériques soit inférieur à 40 pce, préférentiellement compris entre 5 et 30 pce, et plus préférentiellement compris entre 10 et 25 pce.

Ces polymères thermoplastiques peuvent être notamment les polymères de poly(para-phénylène éther) (noté en abrégé « PPE »). Ces polymères thermoplastiques PPE sont bien connus de l'homme du métier, ce sont des résines solides à température ambiante (20°C) compatibles avec les polymères styréniques, qui sont notamment utilisées pour augmenter la température de transition vitreuse d'élastomères thermoplastique dont le bloc thermoplastique est un bloc styrénique (voir par exemple « Thermal, Mechanical and Morphological Analyses of Poly (2,6-dimethyl-1, 4 phenylene oxide)/Styrene-Butadiene-Styrene Blends », Tucker, Barlow and Paul, Macromolecules, 1988, 21, 1678-1685).

Si le bloc élastomère des élastomères thermoplastiques est un bloc élastomère saturé, il pourra être nécessaire d'inclure au pneumatique une sous-couche ou couche d'adhésion sous la portion sculptée de la bande de roulement qui contiendra un élastomère thermoplastique à bloc élastomère insaturé pour favoriser l'adhésion entre ladite bande de roulement et la couche adjacente (par exemple l'armature de sommet ou ceinture) au sein du pneumatique fini.

Cette bande de roulement peut-être montée sur un pneumatique de manière classique, ledit pneumatique comprenant en plus de la bande de roulement, un sommet, deux flancs et deux bourrelets, une armature de carcasse ancrée aux deux bourrelets, et une armature de sommet.

Optionnellement et comme indiqué précédemment, le pneumatique selon l'invention peut comprendre en outre une sous-couche ou une couche d'adhésion entre la portion sculptée de la bande de roulement et l'armature de sommet.

De manière générale, le pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

A titre de poids lourds, on pourra notamment comprendre des métros, des bus et des engins de transport routier tels que camions, tracteurs, remorques et véhicules hors-la-route comme les engins agricoles ou de génie civil.

La bande de roulement utilisable selon l'invention présente la particularité d'être réticulée une fois le pneumatique cuit au moyen d'un bombardement électronique.

Cette réticulation conduit à la formation de liaisons majoritairement carbone-carbone au sein de la bande de roulement.

Ainsi, elle permet de conférer à la bande de roulement une rigidité à haute température améliorée.

Par conséquent, la présente invention concerne également un procédé de préparation d'une bande de roulement d'un pneumatique tel que défini ci-dessus, comprenant les étapes suivantes :

- extrusion de la bande de roulement, puis
- pose de la bande de roulement extrudée sur le pneumatique, puis
- cuisson du pneumatique, puis
- réticulation de la bande de roulement au moyen d'un bombardement électronique.

Ainsi, la bande de roulement du pneumatique selon l'invention est tout d'abord préparée de façon classique, par incorporation des différents composants dans une extrudeuse bi-vis, de façon à réaliser la fusion de la matrice et une incorporation de tous les ingrédients, puis utilisation d'une filière permettant de réaliser le profilé.

Les différents composants de la bande de roulement sont en particulier les élastomères thermoplastiques vus précédemment qui sont disponibles par exemple sous la forme de billes ou de granulés.

La bande de roulement est ensuite posée sur le pneumatique.

Le pneumatique est ensuite cuit. La bande de roulement est alors généralement sculptée dans le moule de cuisson du pneumatique.

La bande de roulement est enfin réticulée au moyen d'un bombardement électronique.

De manière préférée, ce bombardement électronique s'effectue au moyen d'un rayonnement béta.

De manière préférée, la dose de rayonnement est d'au moins 50 kGy, de préférence varie de 70 à 300 kGy.

Pour une épaisseur de bande de roulement comprise entre 2 mm et 10 mm, le bombardement électronique s'effectue généralement au moyen d'un rayonnement béta de haute énergie, de préférence de 10 MeV. Pour des épaisseurs de bande de roulement inférieures à 2 mm, l'homme de l'art sait adapter l'énergie du rayonnement et peut utiliser des accélérateurs d'électrons de plus faible énergie de préférence compris entre 0,1 MeV et 3 MeV.

L'invention ainsi que ses avantages seront compris de manière plus approfondie, à la lumière des figures, ainsi que des exemples de réalisation qui suivent.

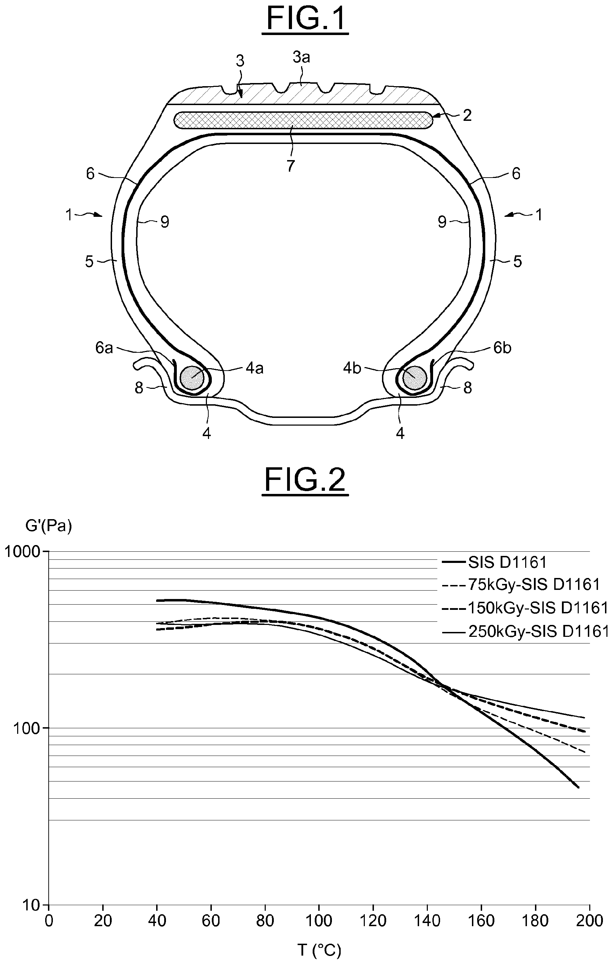

La figure 1 annexée représente de manière schématique (sans respect d'une échelle spécifique), une coupe radiale d'un pneumatique conforme à l'invention.

Ce pneumatique 1 comporte un sommet 2 renforcé comportant une bande de roulement 3 (pour simplifier, comportant une structure très simple) dont la partie radialement externe (3a) est destinée à entrer au contact avec la route, deux bourrelets inextensibles 4 dans lesquels est ancrée une armature de carcasse 6. Le sommet 2, réuni auxdits bourrelets 4 par deux flancs 5, est de manière connue en soi renforcé par une armature de sommet ou « ceinture » 7 au moins en partie métallique et radialement externe par rapport à l'armature de carcasse 6.

Plus précisément, une ceinture de pneumatique est généralement constituée d'au moins deux nappes de ceinture superposées, dites parfois nappes « de travail » ou nappes « croisées », dont les éléments de renforcement ou « renforts » sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Chacune de ces deux nappes croisées est constituée d'une matrice de caoutchouc ou « gomme de calandrage » enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites « de protection » chargées de protéger le reste de la ceinture des agressions externes, des perforations, ou encore des nappes dites « de frettage » comportant des renforts orientés sensiblement selon la direction circonférentielle (nappes dites « à zéro degré »), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier (« steel cords ») ou des câblés textiles (« textile cords ») constitués de fils fins assemblés entre eux par câblage ou retordage.

L'armature de carcasse 6 est ici ancrée dans chaque bourrelet 4 par enroulement autour de deux tringles (4a, 4b), le retournement (6a, 6b) de cette armature 6 étant par exemple disposé vers l'extérieur du pneumatique 1 qui est ici représenté monté sur sa jante 8. L'armature de carcasse 6 est constituée d'au moins une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7. Bien entendu, ce pneumatique 1 comporte en outre de manière connue une couche 9 de gomme ou élastomère intérieure (communément appelée « gomme intérieure » ou « inner liner ») qui définit la face radialement interne du pneumatique et qui est destinée à protéger la nappe de carcasse de la diffusion d'air provenant de l'espace intérieur au pneumatique.

Méthode de mesure

Mesure de G'(T) (module élastique de cisaillement)

La méthode de mesure de G'(T) utilise une machine de rhéologie RPA 2000LV (rhéomètre à disque oscillant) équipée du capteur de viscosité standard 200 in.lbs (22,6 Nm). La machine RPA permet de solliciter en torsion un échantillon de matériau enfermé dans une chambre (ou enceinte) à parois biconiques.

Pour réaliser la mesure, on dépose un échantillon de matériau d'environ 30 mm de diamètre et de masse d'environ 5 g dans l'enceinte du RPA (un volume total de 8 cm$^3$ est considéré comme optimal ; la quantité est suffisante lorsqu'une petite quantité d'échantillon s'échappe de chaque côté de l'enceinte et est visible à la fin du test). De préférence, le matériau est préalablement découpé dans une feuille de ce matériau. Dans le cas où cette feuille de matériau n'a pas une épaisseur suffisante, on peut empiler les sections de cette feuille de matériau.

Dans un premier temps on réalise une opération de mise en forme, en appliquant à l'échantillon enfermé dans la chambre une température de 170°C pendant 7 min avec une déformation de 2,8 % crête-crête à 1,7 Hz.

A la fin de cette opération, l'échantillon est parfaitement moulé dans l'enceinte fermée du RPA. L'échantillon est ensuite refroidi à 40°C directement dans la chambre du RPA. Il est alors possible de débuter la mesure de la valeur de G' à 5 % de déformation crête-crête et 10 Hz dans une gamme de température variant de 40 à 200°C (rampe : 3°C/min).

On obtient une courbe de variation de G' en fonction de la température (telle que celle de la figure 2), sur laquelle on peut extraire les module G' de la composition à 40°C et à 200°C.

Les étapes de mise en forme et de mesure de G' sont faites sans intervention, par programmation de la machine RPA.

Exemples

Dans un premier temps, des compositions de bandes de roulement utilisables dans un pneumatique selon l'invention ont été préparées.

Ces compositions ont ensuite été extrudées.

Les compositions sont présentées dans le tableau 1 ci-après. Les valeurs sont indiquées en pce.

Tableau 1

| Bande de roulement | 1 | 2 | 3 | 4 | 5 | 6 | 7 | 8 |
|---|---|---|---|---|---|---|---|---|
| SIS(1) | 100 | - | - | - | - | - | - | - |
| SIS(2) | - | 100 | - | - | - | - | - | - |
| SBS(3) | - | - | 100 | - | - | - | - | - |
| S-SBR-S(4) | - | - | - | 100 | - | - | - | - |
| COPE(5) | - | - | - | - | 100 | - | - | - |
| PEBA(6) | - | - | - | - | - | 100 | - | - |
| SEBS(7) | - | - | - | - | - | - | 100 | - |
| SEBS(8) | - | - | - | - | - | - | - | 100 |

(1) Elastomère thermoplastique SIS «Kraton D1161 » de la société Kaneka
(2) Elastomère thermoplastique SIS « Hybrar 5125 » de la société Kuraray
(3) Elastomère thermoplastique SBS « Europrene Soit 166 » de la société Polimeri Europa
(4) Elastomère thermoplastique SOE « SOE L606 » de la société Asahi Kasei
(5) Elastomère thermoplastique COPE « Arnitel EL 250 » de la société DSM
(6) Elastomère thermoplastique PEBA « Pebax 2533 » de la société Arkema
(7) Elastomère thermoplastique SEBS « Septon 8076 » de la société Kuraray
(8) Elastomère thermoplastique SEBS « Septon V9827 » de la société Kuraray

Les bandes de roulement, une fois préparées, ont été soumises à un bombardement électronique au moyen d'un rayonnement béta de 10 MeV à différents niveaux d'exposition (75 kGy, 150 kGy et 250 kGy) sur des bandes de roulement de 2 mm d'épaisseur.

Leurs modules G'(T) à 40°C et à 200°C ont été mesurés.

Les résultats sont présentés dans le tableau 2 ci-après.

Tableau 2

| Bande de roulement | Dose (kGy) | G' 200°C (Pa) | G' 40°C (Pa) | Rapport (G' (200°C)/G'(40°C)) en % par rapport à 0 kGy |
|---|---|---|---|---|
| 1 | 0 | 46 | 523 | 100 |
| | 75 | 73 | 387 | 214 |
| | 150 | 95 | 362 | 298 |
| | 250 | 114 | 387 | 335 |
| 2 | 0 | 38 | 968 | 100 |
| | 75 | 89 | 966 | 235 |
| | 150 | 105 | 686 | 390 |
| | 250 | 135 | 680 | 506 |
| 3 | 0 | 60 | 2632 | 100 |
| | 75 | 131 | 2389 | 241 |
| | 150 | 166 | 2223 | 328 |
| | 250 | 241 | 2026 | 522 |
| 4 | 0 | 149 | 1580 | 100 |
| | 75 | 157 | 1003 | 166 |
| | 150 | 194 | 872 | 236 |
| | 250 | 225 | 873 | 273 |
| 5 | 0 | 4,92 | 3046 | 100 |
| | 75 | 64 | 3148 | 1259 |
| | 150 | 94 | 2937 | 1981 |
| | 250 | 176 | 3441 | 3167 |
| 6 | 0 | 2,13 | 4399 | 100 |
| | 75 | 25 | 3929 | 1314 |
| | 150 | 48 | 3221 | 3078 |
| | 250 | 107 | 3102 | 7124 |
| 7 | 0 | 29 | 4159 | 100 |
| | 75 | 33 | 3692 | 128 |
| | 150 | 47 | 4500 | 150 |
| | 250 | 54 | 4801 | 161 |
| 8 | 0 | 168 | 4623 | 100 |
| | 75 | 161 | 3855 | 115 |
| | 150 | 190 | 3249 | 161 |
| | 250 | 179 | 2235 | 220 |

Les figures 2, 3 et 4 présentent en particulier les résultats obtenus pour la bande de roulement 1 utilisables selon l'invention.

En particulier, la figure 2 montre l'évolution de la composante élastique du module de cisaillement en fonction de la température aux quatre niveaux d'exposition (0 kGy, 75 kGy, 150 kGy et 250 kGy).

On constate que le module de cisaillement à 200°C est proportionnel à la dose d'exposition.

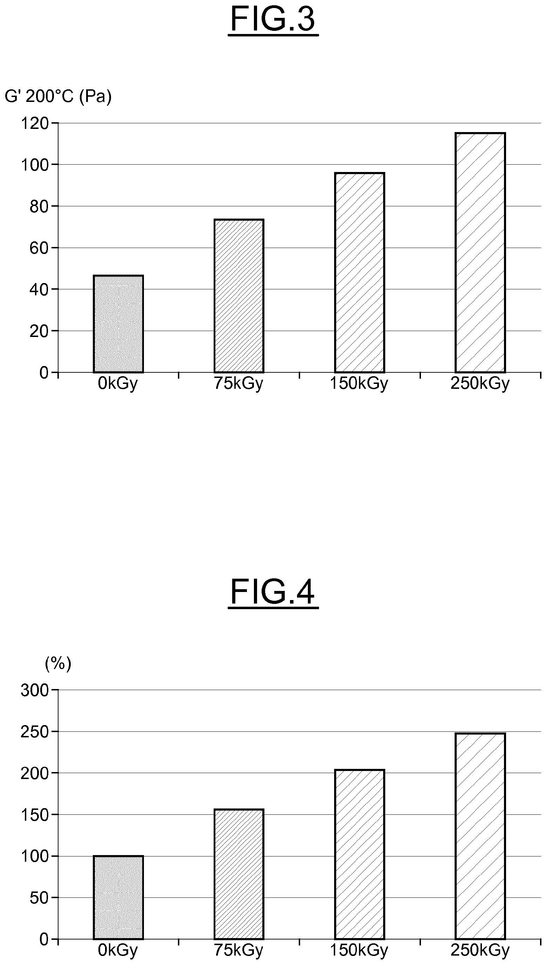

Cela est confirmé par les figures 3 (en pascal) et 4 (en performance - base 100).

Ainsi, ces courbes mettent en avant un écoulement à haute température bien moindre pour les bandes de roulement ayant subi un traitement par bombardement électronique.

Par conséquent, les bandes de roulement selon l'invention présentent une meilleure résistance à haute température.

## Revendications

1. Pneumatique (1) comprenant une bande de roulement (3) à base d'un ou plusieurs élastomères thermoplastiques, un sommet avec une armature de sommet (2), deux flancs (5), deux bourrelets (4), une armature de carcasse (6) ancrée aux deux bourrelets (4) et s'étendant d'un flanc (5) à l'autre, le ou les élastomères thermoplastiques comprenant au moins un bloc élastomère et au moins un bloc thermoplastique, **caractérisé en ce que** la bande de roulement (3) est réticulée au moyen d'un bombardement électronique après la cuisson du pneumatique à un niveau d'exposition de x kGy tel que cette réticulation forme majoritairement des liaisons carbone-carbone, x pouvant prendre toutes les valeurs permettant au rapport

$$\frac{G'(200°C)(xkGy)/G'(40°C)(xkGy)}{G'(200°C)(0kGy)/G'(40°C)(0kGy)}$$

d'être supérieur ou égal à 1,10,

G'(200°C)(xkGy) étant le module élastique de cisaillement à 200°C de la bande de roulement réticulée au moyen d'un bombardement électronique à un niveau d'exposition x kGy,

G'(40°C)(xkGy) étant le module élastique de cisaillement à 40°C de la bande de roulement réticulée au moyen d'un bombardement électronique à un niveau d'exposition x kGy,

G'(200°C)(0kGy) étant le module élastique de cisaillement à 200°C de la bande de roulement non réticulée au moyen d'un bombardement électronique et,

G'(40°C)(0kGy) étant le module élastique de cisaillement à 40°C de la bande de roulement non réticulée au moyen d'un bombardement électronique.

2. Pneumatique selon la revendication 1, **caractérisé en ce que** le ou les élastomères thermoplastiques ont une température de transition vitreuse inférieure ou égale à 25°C, de préférence inférieure ou égale à 10°C.

3. Pneumatique selon l'une des revendications 1 ou 2, **caractérisé en ce que** la masse moléculaire moyenne en nombre des élastomères thermoplastiques est comprise entre 30 000 et 500 000 g/mol, de préférence est comprise entre 40 000 et 400 000 g/mol, plus préférentiellement comprise entre 50 000 et 300 000 g/mol.

4. Pneumatique selon l'une quelconque des revendications précédentes, **caractérisé en ce que** le ou les blocs élastomères des élastomères thermoplastiques sont choisis dans le groupe constitué par les élastomères éthyléniques, les polyéthers, les élastomères diéniques, ces derniers étant optionnellement partiellement ou totalement hydrogénés, et les mélanges de ces polymères, de préférence sont choisis dans le groupe constitué par les polyisoprènes, les polybutadiènes, les polyéthers, les copolymères d'éthylène et de butylène, les copolymères de styrène et de butadiène, ces derniers étant optionnellement partiellement ou totalement hydrogénés, et les mélanges de ces polymères.

5. Pneumatique selon l'une quelconque des revendications précédentes, **caractérisé en ce que** le ou les blocs thermoplastiques des élastomères thermoplastiques sont choisis dans le groupe constitué par les polyoléfines, les polyuréthanes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et les mélanges de ces polymères, de préférence sont choisis dans le groupe constitué par les polystyrènes, les polyesters, les polyamides, les polyuréthanes, et les mélanges de ces polymères, et plus préférentiellement sont choisis dans le groupe constitué par les polystyrènes, les polyesters, les polyamides, et les mélanges de ces polymères.

6. Pneumatique selon l'une quelconque des revendications précédentes, **caractérisé en ce que** le ou les élastomères thermoplastiques sont choisis dans le groupe constitué par les copolymères à blocs styrène/éthylène/butylène/styrène (SEBS), polyéther/polyester (COPE), polyéther/polyamide (PEBA), styrène/butadiène/styrène (SBS), styrène/isoprène/styrène (SIS), styrène/copolymère butadiène-styrène éventuellement hydrogéné/styrène (SOE), et les mélanges de ces copolymères.

7. Pneumatique selon l'une quelconque des revendications précédentes, **caractérisé en ce que** le taux en élastomères thermoplastiques de la bande de roulement varie de 65 à 100 pce, de préférence varie de 70 à 100 pce, plus préférentiellement varie de 75 à 100 pce, et encore plus préférentiellement varie de 95 à 100 pce.

8. Pneumatique selon l'une quelconque des revendications précédentes, **caractérisé en ce que** le ou les élastomères thermoplastiques sont les seuls élastomères de la bande de roulement.

9. Pneumatique selon l'une quelconque des revendications 1 à 7, **caractérisé en ce que** la bande de roulement comprend en outre un ou plusieurs élastomères non-thermoplastiques.

10. Pneumatique selon l'une quelconque des revendications précédentes, **caractérisé en ce que** la bande de roulement comprend en outre au moins un agent plastifiant, de préférence le au moins un agent plastifiant est choisi parmi les résines plastifiantes et les huiles plastifiantes, et plus préférentiellement le au moins un agent plastifiant est une huile paraffinique.

11. Pneumatique selon l'une quelconque des revendications précédentes, **caractérisé en ce que** la bande de roulement est réticulée au moyen d'un bombardement électronique à un niveau d'exposition d'au moins 50 kGy **à 300 kGy**, de préférence allant de 70 à 300 kGy.

12. Pneumatique selon l'une quelconque des revendications précédentes, **caractérisé en ce que** la bande de roulement ne contient pas de système de réticulation.

13. Pneumatique selon l'une quelconque des revendications précédentes, **caractérisé en ce que** le rapport

$$\frac{G'(200°C)(xkGy)/G'(40°C)(xkGy)}{G'(200°C)(0kGy)/G'(40°C)(0kGy)}$$

varie de 1,10 à 75.

14. Procédé de préparation d'un pneumatique tel que défini dans l'une quelconque des revendications précédentes, comprenant les étapes suivantes :

   - extrusion de la bande de roulement, puis
   - pose de la bande de roulement extrudée sur le pneumatique, puis
   - cuisson du pneumatique, puis
   - réticulation de la bande de roulement au moyen d'un bombardement électronique, de préférence effectué au moyen d'un rayonnement béta.

15. Procédé de préparation selon la revendication 14, **caractérisé en ce que** la dose de rayonnement est d'au moins 50 kGy à 300 kGy, de préférence varie de 70 à 300 kGy.

## Patentansprüche

1. Reifen (1), umfassend eine Lauffläche (3) auf Basis eines oder mehrerer thermoplastischer Elastomere, ein Oberteil mit einer Oberteilverstärkung (2), zwei Seitenwände (5), zwei Wülste (4), eine Karkassenverstärkung (6), die an den beiden Wülsten (4) verankert ist und von einer Seitenwand (5) zur anderen verläuft, wobei das oder die thermoplastische(n) Elastomer(e) mindestens einen Elastomerblock und mindestens einen Thermoplastblock umfasst bzw. umfassen, **dadurch gekennzeichnet, dass** die Lauffläche (3) durch Elektronenbeschuss nach dem Vulkanisieren des Reifens bei einer Bestrahlungsdosis von x kGy vernetzt wird, sodass bei dieser Vernetzung hauptsächlich Kohlenstoff-Kohlenstoff-Bindungen entstehen, wobei x jeder beliebige Wert sein kann, der dafür sorgt, dass das Verhältnis

$$\frac{G'(200°C)(xkGy)/(G'(40°C)(xkGy)}{G'(200°C)(0kGy)/(G'(40°C)(0kGy)}$$

größer gleich 1,10 ist,

wobei G'(200°C)(xkGy) der elastische Schubmodul der Lauffläche bei 200°C ist, die durch Elektronenbeschuss bei einer Bestrahlungsdosis von x kGy vernetzt wird,
wobei G'(40°C)(xkGy) der elastische Schubmodul der Lauffläche bei 40°C ist, die durch Elektronenbeschuss bei einer Bestrahlungsdosis von x kGy vernetzt wird, wobei G(200°C)(0kGy) der elastische Schubmodul der Lauffläche bei 200°C ist, die nicht durch Elektronenbeschuss vernetzt wird, und
wobei G'(40°C)(0kGy) der elastische Schubmodul der Lauffläche bei 40°C ist, die nicht durch Elektronenbeschuss vernetzt wird.

2. Reifen nach Anspruch 1, **dadurch gekennzeichnet, dass** das oder die thermoplastische(n) Elastomer(e) eine Glasübergangstemperatur von kleiner gleich 25°C, vorzugsweise kleiner gleich 10°C aufweisen.

3. Reifen nach Anspruch 1 oder 2, **dadurch gekennzeichnet, dass** die zahlengemittelte Molmasse der thermoplastischen Elastomere zwischen 30.000 und 500.000 g/mol, vorzugsweise zwischen 40.000 und 400.000 g/mol, bevorzugter zwischen 50.000 und 300.000 g/mol liegt.

4. Reifen nach einem der vorhergehenden Ansprüche, **dadurch gekennzeichnet, dass** der Elastomerblock oder die Elastomerblöcke der thermoplastischen Elastomere aus der Gruppe ausgewählt sind, die aus Ethylenelastomeren, Polyethern, Dienelastomeren, wobei letztere gegebenenfalls teilweise oder vollständig hydriert sind, und Mischungen aus diesen Polymeren besteht, vorzugsweise aus der Gruppe ausgewählt sind, die aus Polyisoprenen, Polybutadienen, Polyethern, Ethylen-Butylen-Copolymeren, Styrol-Butadien-Copolymeren, wobei letztere gegebenenfalls teilweise oder vollständig hydriert sind, und Mischungen aus diesen Polymeren besteht.

5. Reifen nach einem der vorhergehenden Ansprüche, **dadurch gekennzeichnet, dass** der Thermoplastblock oder die Thermoplastblöcke der thermoplastischen Elastomere aus der Gruppe ausgewählt sind, die aus Polyolefinen, Polyurethanen, Polyamiden, Polyestern, Polyacetalen, Polyethern, Polyphenylensulfiden, Polyfluorkohlenwasserstoffen, Polystyrolen, Polycarbonaten, Polysulfonen, Polymethylmethacrylat, Polyetherimid, thermoplastischen Copolymeren und Mischungen aus diesen Polymeren besteht, vorzugsweise aus der Gruppe ausgewählt sind, die aus Polystyrolen, Polyestern, Polyamiden, Polyurethanen und Mischungen aus diesen Polymeren besteht, und bevorzugter aus der Gruppe ausgewählt sind, die aus Polystyrolen, Polyestern, Polyamiden und Mischungen aus diesen Polymeren besteht.

6. Reifen nach einem der vorhergehenden Ansprüche, **dadurch gekennzeichnet, dass** das oder die thermoplastische(n) Elastomer(e) aus der Gruppe ausgewählt sind, die aus Styrol/Ethylen/Butylen/Styrol-Blockcopolymeren (SEBS), Polyether/Polyester-Blockcopolymeren (COPE), Polyether/Polyamid-Blockcopolymeren (PEBA), Styrol/Butadien/Styrol-Blockcopolymeren (SBS), Styrol/Isopren/Styrol-Blockcoplymeren (SIS), Styrol/gegebenenfalls hydriertes Butadien-Styrol-Copolymer/Styrol-Blockcopolymer (SOE) und Mischungen aus diesen Copolymeren besteht.

7. Reifen nach einem der vorhergehenden Ansprüche, **dadurch gekennzeichnet, dass** der Gehalt an thermoplastischen Elastomeren der Lauffläche zwischen 65 und 100 pce, vorzugsweise zwischen 70 und 100 pce, bevorzugter zwischen 75 und 100 pce und noch bevorzugter zwischen 95 und 100 pce beträgt.

8. Reifen nach einem der vorhergehenden Ansprüche, **dadurch gekennzeichnet, dass** das oder die thermoplastische(n) Elastomer(e) die einzeigen Elastomere der Lauffläche sind.

9. Reifen nach einem der Ansprüche 1 bis 7, **dadurch gekennzeichnet, dass** die Lauffläche ferner ein nicht thermoplastisches Elastomer oder mehrere nicht thermoplastische Elastomere umfasst.

10. Reifen nach einem der vorhergehenden Ansprüche, **dadurch gekennzeichnet, dass** die Lauffläche ferner mindestens einen Weichmacher umfasst, wobei der mindestens eine Weichmacher vorzugsweise aus Weichmacherharzen und Weichmacherölen ausgewählt ist, und der mindestens eine Weichmacher bevorzugter ein Paraffinöl ist.

11. Reifen nach einem der vorhergehenden Ansprüche, **dadurch gekennzeichnet, dass** die Lauffläche durch Elektronenbeschuss bei einer Bestrahlungsdosis von mindestens 50 kGy bis 300 kGy, vorzugsweise zwischen 70 und 300 kGy vernetzt wird.

12. Reifen nach einem der vorhergehenden Ansprüche, **dadurch gekennzeichnet, dass** die Lauffläche kein Vernetzungssystem enthält.

13. Reifen nach einem der vorhergehenden Ansprüche, **dadurch gekennzeichnet, dass** das Verhältnis

$$\frac{G'(200°C)(xkGy)/(G'(40°C)(xkGy)}{G'(200°C)(0kGy)/(G'(40°C)(0kGy)}$$

zwischen 1,10 und 75 liegt.

14. Verfahren zur Herstellung eines Reifens nach einem der vorhergehenden Ansprüche, das folgende Schritte umfasst:

- Extrudieren der Lauffläche, anschließend
- Aufsetzen der extrudierten Lauffläche auf den Reifen, anschließend
- Vulkanisieren des Reifens, anschließend
- Vernetzen der Lauffläche durch Elektronenbeschuss, der vorzugsweise mit einer Betastrahlung erzielt wird.

15. Herstellungsverfahren nach Anspruch 14, **dadurch gekennzeichnet, dass** die Strahlendosis mindestens 50 kGy bis 300 kGy beträgt, vorzugsweise zwischen 70 und 300 kGy liegt.

**Claims**

1. Tyre (1) comprising a tread (3) based on one or more thermoplastic elastomers, a crown with a crown reinforcement (2), two sidewalls (5), two beads (4), a carcass reinforcement (6) anchored to the two beads (4) and extending from one sidewall (5) to the other, the thermoplastic elastomer or elastomers comprising at least one elastomer block and at least one thermoplastic block, **characterized in that** the tread (3) is crosslinked by means of electron bombardment, after the curing of the tyre, at an exposure level of x kGy such that this crosslinking predominantly forms carbon-carbon bonds, it being possible for x to take any value that enables the ratio

$$\frac{G'(200°C)(xkGy)/G'(40°C)(xkGy)}{G'(200°C)(0kGy)/G'(40°C)(0kGy)}$$

to be greater than or equal to 1.10,

G'(200°C)(xkGy) being the elastic shear modulus at 200°C of the tread crosslinked by means of electron bombardment at an exposure level of x kGy,
G'(40°C)(xkGy) being the elastic shear modulus at 40°C of the tread crosslinked by means of electron bombardment at an exposure level of x kGy,
G(200°C)(0kGy) being the elastic shear modulus at 200°C of the tread not crosslinked by means of electron bombardment, and
G'(40°C)(0kGy) being the elastic shear modulus at 40°C of the tread not crosslinked by means of electron bombardment.

2. Tyre according to Claim 1, **characterized in that** the thermoplastic elastomer or elastomers have a glass transition temperature below or equal to 25°C, preferably below or equal to 10°C.

3. Tyre according to either of Claims 1 and 2, **characterized in that** the number-average molecular weight of the thermoplastic elastomers is between 30 000 and 500 000 g/mol, preferably is between 40 000 and 400 000 g/mol, more preferentially between 50 000 and 300 000 g/mol.

4. Tyre according to any one of the preceding claims, **characterized in that** the elastomer block or blocks of the thermoplastic elastomers are selected from the group consisting of ethylenic elastomers, polyethers, diene elastomers, the latter optionally being partially or completely hydrogenated, and mixtures of these polymers, preferably are selected from the group consisting of polyisoprenes, polybutadienes, polyethers, ethylene-butylene copolymers, styrene-butadiene copolymers, the latter optionally being partially or completely hydrogenated, and mixtures of these polymers.

5. Tyre according to any one of the preceding claims, **characterized in that** the thermoplastic block or blocks of the thermoplastic elastomers are selected from the group consisting of polyolefins, polyurethanes, polyamides, polyesters, polyacetals, polyethers, polyphenylene sulfides, polyfluorinated compounds, polystyrenes, polycarbonates, polysulfones, polymethyl methacrylate, polyetherimide, thermoplastic copolymers, and mixtures of these polymers, preferably are selected from the group consisting of polystyrenes, polyesters, polyamides, polyurethanes, and mixtures of these polymers, and more preferably are selected from the group consisting of polystyrenes, polyesters, polyamides, and mixtures of these polymers.

6. Tyre according to any one of the preceding claims, **characterized in that** the thermoplastic elastomer or elastomers are selected from the group consisting of styrene/ethylene/butylene/styrene (SEBS), polyether/polyester (COPE), polyether/polyamide (PEBA), styrene/butadiene/styrene (SBS), styrene/isoprene/styrene (SIS), styrene/optionally hydrogenated butadiene-styrene copolymer/styrene (SOE) block copolymers, and mixtures of these copolymers.

7. Tyre according to any one of the preceding claims, **characterized in that** the thermoplastic elastomer content of the tread varies from 65 to 100 phr, preferably varies from 70 to 100 phr, more preferentially varies from 75 to 100 phr and more preferentially still varies from 95 to 100 phr.

8. Tyre according to any one of the preceding claims, **characterized in that** the thermoplastic elastomer or elastomers are the only elastomers of the tread.

9. Tyre according to any one of Claims 1 to 7, **characterized in that** the tread additionally comprises one or more non-thermoplastic elastomers.

10. Tyre according to any one of the preceding claims, **characterized in that** the tread additionally comprises at least one plasticizing agent, preferably the at least one plasticizing agent is selected from plasticizing resins and plasticizing oils, and more preferably the at least one plasticizing agent is a paraffinic oil.

11. Tyre according to any one of the preceding claims, **characterized in that** the tread is crosslinked by means of electron bombardment at an exposure level of at least 50 kGy to 300 kGy, preferably ranging from 70 to 300 kGy.

12. Tyre according to any one of the preceding claims, **characterized in that** the tread does not contain a crosslinking system.

13. Tyre according to any one of the preceding claims, **characterized in that** the ratio

$$\frac{G'(200°C)(xkGy)/G'(40°C)(xkGy)}{G'(200°C)(0kGy)/G'(40°C)(0kGy)}$$

varies from 1.10 to 75.

14. Process for preparing a tyre as defined in any one of the preceding claims, comprising the following steps:

- extruding the tread, then
- placing the extruded tread on the tyre, then
- curing the tyre, then
- crosslinking the tread by means of electron bombardment.

**15.** Preparation process according to Claim 14, **characterized in that** the radiation dose is at least 50 kGy to 300 kGy, and preferably varies from 70 to 300 kGy.

## FIG.1

## FIG.2

# FIG.3

G' 200°C (Pa)

# FIG.4

(%)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012152686 A
- DE 102012105730
- JP 2009173048 A
- US 4946899 A
- FR 2740778
- US 6013718 A
- FR 2765882
- US 5977238 A
- WO 0192402 A
- US 6815473 B
- WO 2004096865 A
- US 20060089445 A
- EP 1127909 A
- US 6503973 B
- WO 0316837 A

**Littérature non-brevet citée dans la description**

- **Z. FODOR ; J.P. KENNEDY.** *Polymer Bulletin,* 1992, vol. 29 (6), 697-705
- **J. E. PUSKAS ; G. KASZAS ; J.P. KENNEDY ; W.G. HAGER.** *Journal of Polymer Science Part A: Polymer Chemistry,* 1992, vol. 30, 41
- **J.P. KENNEDY ; N. MEGURIYA ; B. KESZLER.** *Macromolecules,* 1991, vol. 24 (25), 6572-6577
- **G. KASZAS ; J.E. PUSKAS ; P. KENNEDY.** *Applied Polymer Science,* 1990, vol. 39 (1), 119-144
- **J.E. PUSKAS ; G. KASZAS ; J.P. KENNEDY.** *Macromolecular Science, Chemistry A28,* 1991, 65-80
- **TUCKER ; BARLOW ; PAUL.** Thermal, Mechanical and Morphological Analyses of Poly (2,6-dimethyl-1, 4 phenylene oxide)/Styrene-Butadiene-Styrene Blends. *Macromolecules,* 1988, vol. 21, 1678-1685